Europäisches Patentamt

European Patent Office

Office européen des brevets

(11) Veröffentlichungsnummer: **0 031 969**

**A1**

(12) **EUROPÄISCHE PATENTANMELDUNG**

(21) Anmeldenummer: **80108266.0**

(22) Anmeldetag: **31.12.80**

(51) Int. Cl.³: **B 60 P 3/14**
**B 64 F 1/00**

(30) Priorität: **02.01.80 DE 3000037**

(43) Veröffentlichungstag der Anmeldung:
**15.07.81 Patentblatt 81/28**

(84) Benannte Vertragsstaaten:
**AT BE CH DE FR GB IT LI LU NL SE**

(71) Anmelder: **Flughafen Frankfurt/Main AG**

**D-6000 Frankfurt (Main) 75(DE)**

(72) Erfinder: **Stoye, Eberhard**
**Hamburger Strasse 61**
**D-6090 Rüsselsheim(DE)**

(74) Vertreter: **Lotterhos, Hans Walter, Dr.-Ing.**
**Lichtensteinstrasse 3**
**D-6000 Frankfurt am Main(DE)**

(54) **Inspektionsfahrzeug.**

(57) Zur Durchführung von Inspektions-, Wartungs-, Reparatur- und/oder Montagearbeiten an bodennahen Anlagen an Flughäfen, insbesondere Feuern (9) an Lande- und Startbahnen, ist ein Inspektionsfahrzeug (1) mit wenigstens einem Arbeits- bzw. Sitzplatz (4) im Bereich einer verschließbaren Arbeitsöffnung (2) im Fahrzeugboden (10) mit geringer Freiheit zum Boden (0) im Inneren des Inspektionsfahrzeugs (1) vorgesehen.

Als Verschluß für die Arbeitsöffnung (2) kann wenigstens eine in Schließ - und/oder in Offenstellung verriegelbare Schiebetür (3) aus durchsichtigem Material und/oder in einer Gitter-Konstruktion vorgesehen sein. Zur Erhöhung der Sicherheit für die auf dem Arbeits- bzw. Sitzplatz (4) tätige Person können im Bereich der Arbeitsöffnung Fußstützen (40) zugeordnet sein sowie Not-Ausschalter, Handtaster und/oder Schlüsselschalter eines mit einer Bremse des Inspektionsfahrzeugs (1) in Wirkverbindung stehenden elektrischen Schaltkreises angeordnet sein.

Die Inspektions-, Wartungs- und Reparaturarbeiten an bodennahen Befeuerungsanlagen können damit aus dem Inspektionsfahrzeug (1) heraus weitgehend von Witterungseinflüssen geschützt, mit geringem Zeitaufwand sowie in einfacher und sicherer Weise von bodennahen Arbeitsplätzen ausgeführt werden.

./...

Fig.3

Inspektionsfahrzeug

Die Erfindung bezieht sich auf ein Inspektionsfahrzeug für Inspektions-, Wartungs-, Reparatur- und/oder Montagearbeiten an bodennahen Anlagen an Flughäfen.

Inspektions-, Wartungs, Reparatur- und/oder Montagearbeiten an bodennahen Befeuerungen von Flughäfen, insbesondere von deren Start- und Landebahnen, wurden bisher in der Weise durchgeführt, daß mit einem üblichen Transportfahrzeug, in dem die etwa benötigten Werkzeuge, Arbeitsmittel und Austauschteile untergebracht waren, die einzelnen Feuer der Befeuerung nacheinander angefahren worden sind. Das Fahrzeug wurde neben den Feuern abgestellt. Der oder die Kontrolleure bzw. Reparateure verließen das Fahrzeug, inspizierten das Feuer, schafften im Bedarfsfalle Arbeitsmittel vom Fahrzeug zur Arbeitsstätte bzw. zum Feuer und zurück, begaben sich nach Ausführung der jeweils erforderlichen Arbeiten zurück an das Fahrzeug und fuhren dann das nächste Feuer an. Eine auch nur visuelle Inspektion der Feuer vom Führerhaus des Fahrzeugs aus ist dabei praktisch ausgeschlossen. Es ist vielmehr erforderlich, ungeachtet der jeweiligen Witterung das Fahrzeug zu verlassen und das Feuer aus unmittelbarer Nähe - gegebenenfalls nach Entfernen des Oberteils des Feuers - zu besichtigen. Bei dieser Verfahrensweise kann der Anteil der Wegezeit vom Fahrzeug zu den Feuern an der insgesamt erforderlichen Arbeitszeit, beispielsweise bei Inspektionsarbeiten an Unterflurfeueranlagen, größer sein als der Anteil für die eigentliche Inspektion. Eine Beschränkung der Gesamtarbeitszeit auf die reine Inspektions- bzw. Arbeitszeit geht bei ungünstigen Witterungsverhältnissen - soweit diese einen freien Zugang zu den Feuern und ein Arbeiten an den Feuern ohne Witterungsschutz zulassen - zu Lasten der die Arbeiten ausführenden Personen bzw. zu Lasten deren Leistungsfähigkeit und/oder Gesundheit.

Zur Durchführung von Arbeiten an unterirdisch verlegten Hochspannungskabeln in dafür vorgesehenen unterirdischen Wartungs- bzw. Kabelräumen ist aus der US-PS 3 914 955 ein über einem Kabelraum abstellbares Anhängerfahrzeug mit einem Werkstattraum und mit einem eine Klimaanlage aufnehmenden Klimaraum bekannt. Es handelt sich um eine mobile, unabhängige Einheit, um die in Kabelräumen für die Durchführung von Kabelarbeiten erforderlichen Luftumgebungsbedingungen zu schaffen und aufrecht zu erhalten. Sowohl im Boden des Werkstattraums als auch des Klimaraums sind durch Deckel verschließbare Öffnungen vorgesehen. Diese Öffnungen sind während der Kabelarbeiten offen und über flexible, rohrförmige Verbindungsteile an entsprechende, an der Bodenoberfläche mündende Vertikalschächte zum unterirdischen Kabelraum angeschlossen. So kann auf diesem Weg der Kabelraum über den Werkstattraum von der Klimaanlage mit entsprechend eingestellter Luft beschickt und durchströmt werden und so die Luftbedingungen im Hinblick auf Lufttemperatur und Luftfeuchtigkeit im Kabelraum und Werkstattraum vorgegeben werden. Während die Öffnung im Klimaraum allein für den Luftdurchtritt vorgesehen ist, ist die Öffnung im Werkstattraum größer und als sogenanntes Mannloch ausgebildet und dient außerdem noch der Passage von Personen wie auch dem Transport von Arbeitsmitteln vom Werkstattraum zu der unterirdischen Arbeitsstelle und zurück. Dieses Anhängerfahrzeug ist als Inspektionsfahrzeug an bodennahen Anlagen, wie Befeuerungen, von Flughäfen nicht bestimmt und auch in Verbindung mit einer Zugmaschine nicht geeignet.

Die der Erfindung zugrunde liegende Aufgabe kann so formuliert werden:
Ein Inspektionsfahrzeug für Inspektions-, Wartungs-, Reparatur- und/oder Montagearbeiten an bodennahen Anlagen an Flughäfen zu schaffen, mit welchem die erforderlichen Arbeiten aus dem Fahrzeug heraus, weitgehend vor Witterungseinflüssen geschützt, mit geringem Zeitaufwand, in einfacher und sicherer Weise durchgeführt werden können.

Dies gelingt nach der Erfindung mit einem Inspektionsfahrzeug, das wenigstens einen Arbeits- bzw. Sitzplatz aufweist, der im Bereich einer verschließbaren Arbeitsöffnung im Fahrzeugboden mit geringer Bodenfreiheit im Inneren des Fahrzeugs oder Kraftfahrzeugs ausgebildet ist.

Dadurch ist ein unmittelbares An- und Überfahren der in Betracht kommenden Arbeitsstelle bzw. dem bodennahen Feuer möglich, so daß bei Ausrichtung von Arbeitsstelle und Arbeitsöffnung bzw. Arbeitsplatz die jeweiligen Arbeiten sogleich und im Schutz des Inspektionsfahrzeugs aufgenommen werden können. Die benötigten und im Inspektionsfahrzeug aufgenommenen Werkzeuge und Arbeitseinrichtungen stehen sogleich in unmittelbarer Nähe des Arbeitsplatzes bzw. der Arbeitsstelle zur Verfügung. Bei Anwendung eines Kraftfahrzeugs mit Frontantrieb aber auch bei einem Kraftfahrzeug mit Hinterradantrieb und einer Anordnung von Motor und Triebwerk über der Hinterradachse stehen der Anordnung der Arbeitsöffnung sowie
des Arbeitsplatzes zwischen Vorder- und Hinterachse
keine Hindernisse wegen eines Gelenkwellentunnels entgegen. Daher können auf Basis derartiger Kraftfahrzeuge
vergleichsweise einfache Inspektionsfahrzeuge nach der
Erfindung erstellt werden.

Auch können vorzugsweise in Verbindung mit einer Ausgestaltung der Erfindung, die darin besteht, daß in
Längsachse des Inspektionsfahrzeugs gesehen im Bereich
der Arbeitsöffnung wenigstens zwei gegenüberliegend
angeordnete Arbeits- bzw. Sitzplätze vorgesehen sind,
vor allem beim langsamen Ab- bzw. Überfahren einer Mehrzahl in Reihe hintereinander angeordneter Unterflurfeuer
mit dem Inspektionsfahrzeug nicht nur visuelle Inspektionsarbeiten rasch und einfach, sondern nach Anhalten
des Fahrzeugs auch Wartungs-, Reinigungs- und Reparaturarbeiten von diesen Arbeits- bzw. Sitzplätzen aus durchgeführt werden. Ein Umsteigen innerhalb des Inspektionsfahrzeugs in den Bereich der von der Arbeitsöffnung umgebenen Arbeitsstelle entfällt, so daß mehrere Arbeitsstellen in rascher Folge nacheinander angefahren werden
können. Der Fahrer des Inspektionsfahrzeuges hat dabei
in der Regel nur vom Fahrersitz aus dafür zu sorgen, daß
die jeweiligen Befeuerungseinrichtungen exakt zu dem oder
den Arbeitsplätzen angesteuert und ausgerichtet werden.

Eine weitere Ausgestaltung der Erfindung besteht darin,
daß im Bereich der Arbeitsöffnung jedem Arbeits- bzw.
Sitzplatz Fußstützen zugeordnet sind.
Dadurch wird in vorteilhafter Weise zur Sicherheit der
Personen am Arbeitsplatz beigetragen.

Eine weitere Ausgestaltung der Erfindung besteht darin,
daß im Bereich der Arbeits- bzw. Sitzplätze Not-Ausschalter, Handtaster und/oder Schlüsselschalter eines vorzugsweise mit einer Bremse des Inspektionsfahrzeugs in Wirkverbindung stehenden elektrischen Schaltkreises angeordnet sind.

Dadurch werden Unfälle wegen Kommunikationsschwierigkeiten zwischen den sich auf den Arbeitsplätzen an der Arbeitsöffnung befindenden Personen und dem sich räumlich getrennt im Fahrerhaus befindenden Fahrer des Inspektionsfahrzeugs praktisch ausgeschlossen.

Eine weitere Ausgestaltung der Erfindung besteht darin, daß der Verschluß der Arbeitsöffnung aus durchsichtigem Material besteht und/oder als Gitterkonstruktion ausgebildet ist.

Dadurch ist auch bei geschlossener Arbeitsöffnung eine visuelle Inspektion bzw. Kontrolle von Anlagen im darunter gelegenen Boden- bzw. Fahrbahnbereich gegeben. Daher ist auch eine Inspektion aus einem sich langsam über die zu kontrollierenden Anlagen bewegenden Inspektionsfahrzeug heraus möglich, ohne daß besondere Maßnahmen für die Sicherheit des Kontrolleurs - wie dies bei geöffneter Arbeitsöffnung erforderlich wäre - notwendig sind. Die luftdurchlässige und trittfeste Gitterkonstruktion des Verschlusses der Arbeitsöffnung bietet sich vor allem für den Einsatz unter angenehmen Witterungsbedingungen an.

Eine weitere Ausgestaltung der Erfindung besteht darin, daß als Verschluß für die Arbeitsöffnung wenigstens eine in Schließ- und/oder in Offenstellung verriegelbare Schiebetür vorgesehen ist.

Damit ist ein einfach zu handhabender und in Offenstellung platzsparend unterzubringender Verschluß vorgegeben. Eine Behinderung durch abgenommene und im Wege stehende Verschlußteile im Bereich der Arbeitsöffnung entfällt. Die Schiebetür, die vorzugsweise aus zwei gegeneinander bewegbaren Schiebetürhälften aufgebaut ist, ist in den Endpositionen sicher festlegbar.

- 6 -

Eine weitere Ausgestaltung der Erfindung besteht darin, daß die Schiebetür in Schließ- und/oder Offenstellung mit Endschaltern eines vorzugsweise mit einer Bremse des Inspektionsfahrzeugs in Wirkverbindung stehenden elektrischen Schaltkreises in Kontakt ist. Dadurch wird erreicht, daß ein Bewegen des Inspektionsfahrzeugs bei geöffneter Schiebetür durch Beeinflussung der Fahrzeugbremse verhindert ist oder zumindest erst nach bewußter Ausschaltung der vorgegebenen Sicherheitsmaßnahmen möglich ist.

Eine weitere Ausgestaltung der Erfindung besteht darin, daß die Schiebetür in Offenstellung von einem Federspeicher gehalten ist. Dadurch ist auf einfache Weise möglich, eine sich in Offenstellung befindliche Schiebetür durch ein beispielsweise vom Fahrersitz des Inspektionsfahrzeugs aus ferngesteuertes Auslösen des Federspeichers zu schließen und durch die dadurch betätigten Endschalter in Schließ- und Offenstellung der Schiebetür die Fahrzeugbremse zu lösen.

Eine weitere Ausgestaltung der Erfindung besteht darin, daß die Arbeitsöffnung im Bereich zwischen Unterseite des Fahrzeugbodens und Oberfläche des Bodens bzw. des Flugfelds durch Schürzen bzw. Pendelschürzen, auf- und abbewegbare Abschirmwände oder auf- und abbewegbare Faltenbalgen abschirmbar ist. Dadurch wird ein ergänzender Witterungsschutz für die Personen am Arbeitsplatz aber auch ein Schutz der bei den Arbeiten frei- bzw. offengelegten Anlagen oder Anlageteile erreicht. Eine derartige Abschirmung ist insbesondere bei durch Schneewehen, strömenden Regen, Sturm oder dergleichen bestimmten äußeren Bedingungen von großer Bedeutung.

Eine weitere Ausgestaltung der Erfindung besteht darin, daß an der Frontseite des Inspektionsfahrzeugs eine lösbar befestigte Positionier- bzw. Peilvorrichtung hervorragt.

Dadurch wird das Ansteuern der jeweiligen Arbeitsstellen, beispielsweise Unterflurfeuer, mit einem vergleichsweise einfach aufgebauten Gerät exakt möglich.

Eine weitere Ausgestaltung der Erfindung besteht darin, daß als Positionier- bzw. Peilvorrichtung ein dreickförmiges Rahmengestell vorgesehen ist, dessen vorderes, freies Ende bzw. die Dreiecksspitze von einem Rad unterstützt ist.

Eine weitere Ausgestaltung der Erfindung besteht darin, daß im Bereich des vorderen Endes der Positionier- bzw. Peilvorrichtung ein Impulsgeber und/ oder eine Positionsleuchte vorgesehen ist.

Damit ist ein wertvolles Hilfsmittel für den Fahrer des Inspektionsfahrzeugs gegeben, um eine genaue und rasche Ausrichtung von Arbeitsöffnung bzw. Arbeitsplatz und Arbeitsstelle zu erreichen. Auch ist bei speziellen Anwendungsfällen, beispielsweise bei einer Reihe von aequidistant hintereinander angeordneten, gleichartigen Befeuerungsanlagen durch Vorgabe von geeigneten Impulsgebern, Sensoren oder dergleichen ein selbsttätiges Ansteuern und/oder Ausrichten darstellbar.

Eine weitere Ausgestaltung der Erfindung besteht darin, daß an einer oder an beiden Längsseiten des Inspektionsfahrzeugs ein auskragender, über eine Seitentür vom Inspektionsfahrzeug zugängiger Seitenausleger mit einem Arbeitsplatz lösbar befestigt ist.

Dadurch ergibt sich die Möglichkeit, auch Arbeiten, vor allem Inspektions- und Wartungsarbeiten, an Anlagen im Bodenbereich auszuführen, die im gewissen Abstand abseits der Fahrstrecke des Inspektionsfahrzeugs angeordnet sind. Diese Möglichkeit ist besonders bedeutsam
für Anlagen, die abseits der Lande- und Startbahnen in
nicht in jedem Fall vom Inspektionsfahrzeug befahrbarem
Gelände gelegen sind. Auch können damit solche Befeuerungsanlagen auf einfache und rasche Weise inspiziert,
gewartet oder gereinigt werden, die nicht vom Inspektionsfahrzeug überfahrbar sind.

Der Einsatz eines Inspektionsfahrzeugs nach der Erfindung hat den besonderen Vorteil, daß die Lande- und
Startbahnen, wenn überhaupt, nur kurzzeitig für den
Flugverkehr nicht zur Verfügung stehen. Da des weiteren mit der Bahnoberfläche von Lande- oder Startbahn
eine für das Inspektionsfahrzeug nach der Erfindung
praktisch konstante Fahr- bzw. Bezugsebene gegeben ist,
ist auch die Möglichkeit eröffnet, das Anfahren und
Ausrichten von Inspektionsfahrzeugen und Arbeitsstelle
selbsttätig gesteuert vorzunehmen.

Anhand der beigefügten Zeichnungen wird die Erfindung
und deren Merkmale an einem Ausführungsbeispiel näher
erläutert.

Es zeigen schematisch:

Fig. 1   in perspektivischer Ansicht ein Inspektionsfahrzeug nach der Erfindung mit einem Seitenausleger und einer frontalen Positionier- und
         Peileinrichtung beim Einsatz an einer Unterflurbefeuerung an einer Start- und Landebahn
         eines Flughafens,

Fig. 2   in perspektivischer Ansicht und in vergrößer-
         tem Maßstab einen Ausschnitt des Fahrzeugbodens
         des Inspektionsfahrzeugs nach Fig. 1 mit der
         partiell geöffneten Arbeitsöffnung, wobei der
         Übersichtlichkeit wegen die innere Bodenfläche
         weggelassen ist,

Fig. 3    in einem vergrößerten Maßstab einen Ausschnitt eines Längs-schnitts durch das Inspektionsfahrzeug nach Fig. 1 mit zwei Arbeitsplätzen im Bereich der Arbeitsöffnung
und mit einer auf Arbeiten an Flughafen-
Befeuerungs-Anlagen abgestellten Einrichtung
und

Fig. 4    ein Schaltdiagramm der Sicherheitseinrichtung
für den Verschluß bzw. Abschluß der Arbeitsöffnung im Fahrzeugboden.

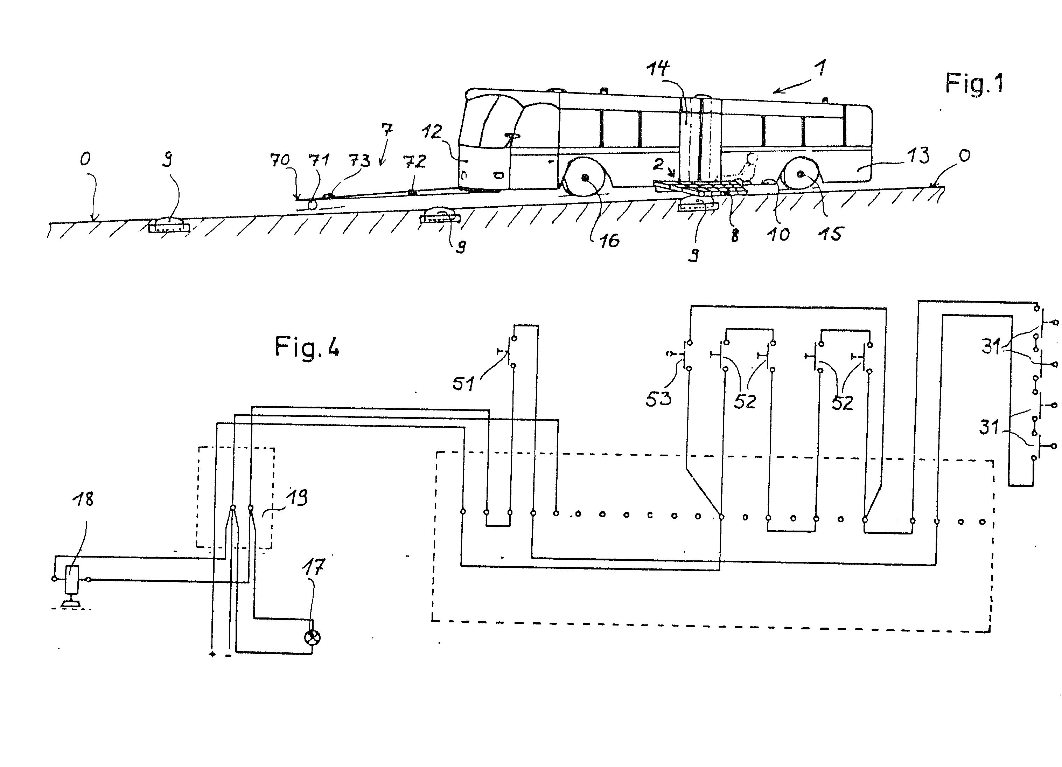

Fig.1 zeigt als Inspektionsfahrzeug 1 ein ausgehend von
einem Omnibus mit geringer Bodenfreiheit – wie er beispielsweise unter der Bezeichnung Neoplam-Bus für den
Passagierdienst im Flughafenbereich bekannt ist – umgerüstetes mehrachsiges Kraftfahrzeug mit Blick auf
die Frontseite 12 und die in Fahrtrichtung gesehene
linke Längsseite 13. Zwischen Vorderachse 16 und Hinterachse 15 des Kraftfahrzeugs 1 ist hier im Bereich
einer Seitentür 14 eine Arbeitsöffnung 2  im Fahrzeugboden 10 vorgesehen. Im Inneren des Inspektionsfahrzeug 1 ist hier eine in Fahrtrichtung schauende Person
auf einem Arbeitsplatz an dem Rand der Arbeitsöffnung 2
sitzend gestrichelt dargestellt. Die Arbeitsöffnung 2
ist genau über einem Unterflurfeuer 9 im Boden O – hier
einer Lande- und Startbahn eines Flughafens – angeordnet und bildet zusammen mit einer Mehrzahl von anderen
Feuern 9 eine sich beispielsweise über mehrere Kilometer
erstreckende Mittellinien-Befeuerung.

An der linken Längsseite 13 ragt im Bereich der Seitentür
14 ein hier lösbar befestigter Seitenausleger 8 hervor.
Dieser hier etwa 3,5m lange Seitenausleger 8 ist über die
Seitentür 14 mit dem Fahrzeuginnenraum verbunden und dient dazu, vom Seitenausleger 8 aus Inspektions-, Reinigungs-, Wartungs- und Reparaturarbeiten an abseits der Fahrstrecke des Inspektionsfahrzeugs 1 gelegenen Feuern und/oder an mit dem Inspektionsfahrzeug 1 nicht überfahrbaren Feuern oder Lampen auszuführen.

An der Frontseite 12 des Inspektionsfahrzeugs 1 ist in Fig. 1 eine Positionier- und Peileinrichtung 7 lösbar befestigt. Diese an der Frontseite hervorragende Vorrichtung 7 besteht hier im wesentlichen aus einem dreieckförmigen Rahmengestell, dessen vorderes, freies Ende 70 bzw. dessen Dreiecksspitze von einem Bugrad bzw. einem Rad 71 am Boden 0 abgestützt ist und mit dem hinteren Ende an der Frontseite 12 lösbar befestigt ist. Auf dem Rahmengestell ist im Bereich des vorderen Ende 70 ein Impulsgeber 72 und eine Positionsleuchte 73 angebracht. Der Impulsgeber 72 ist Teil einer hier nicht in allen Details dargelegten Einrichtung zum Ansteuern und Ausrichten von Arbeitsöffnung 2 bzw. Arbeitsplatz und Feuer 9.

Die Arbeitsöffnung 2 ist bei dem hier gezeigten über den Boden 0 bewegbaren mehrachsigen Inspektionsfahrzeug 1 mit zumindest im Bereich der Arbeitsöffnung 2 geringer Bodenfreiheit symmetrisch zur Längsachse 11 des Inspektionsfahrzeugs 1 angeordnet. Die Arbeitsöffnung 2 weist hier Rechteckform mit den Abmessungen von 1,8 mal 1,0 m auf und ist von einem Rahmen 20 eingefaßt. An diesem Rahmen 20 sind hier die als trittfester Verschluß der Arbeitsöffnung 2 vorgesehenen Schiebetüren 3 über Rollen 33 horizontal verschiebbar aufgenommen. Die mit Handgriffen 30 versehenen Schiebetüren 3 sind in Offenstellung verriegelbar und dabei von einem Federspeicher 32 gehalten. Dieser Federspeicher 32 wird beim Öffnen der Schiebetüren gespannt und ist von Hand aber auch ferngesteuert lösbar, so daß der Schließvorgang selbsttätig abläuft. Die Schiebetüren 3 sind hier gitterförmig bzw. als Rost ausgebildet. In den Endpositionen sowohl in Schließ- als auch in Offenstellung der Türen sind Kontaktschalter 31 angeordnet. Diese Kontakt bzw. Endschalter 31 sind Teil eines elektrischen Schaltkreises (siehe Fig.4), der mit der Bremse des Inspektionsfahrzeugs 1 in Wirkverbindung steht.

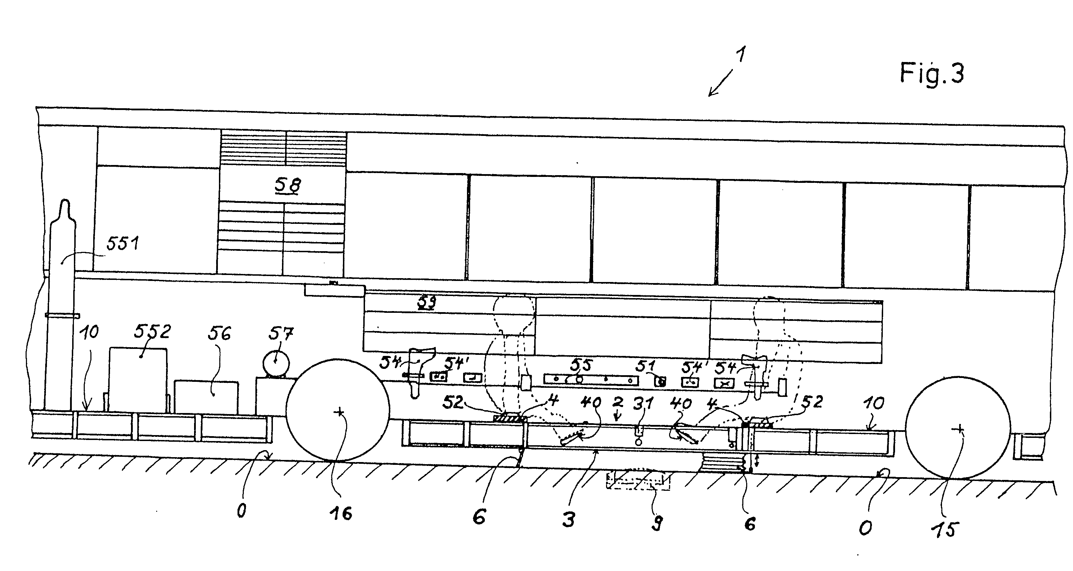

An der Arbeitsöffnung 2 im Bereich des Fahrzeugsbodens 10 sind, wie in Fig.3 gezeigt, zwei gegenüber angeordnete Arbeits- bzw. Sitzplätze 4 vorgesehen. Auf diesen Arbeitsplätzen 4 sitzen - in Fig.3 gestrichelt dargestellte - Personen, die sich mit ihren Füßen an Fußstützen 40 abstützen, die am Rahmen 20 der Arbeitsöffnung 2 befestigt sind. Im Bereich der Arbeitsplätze 4 und im Zugriffsbereich bzw. in Reichweite der auf diesen Sitzplätzen 4 sitzenden Personen sind Notschalter 51, Handtaster 52 und/oder Schlüsselschalter 53 eines mit der Bremse des Inspektionsfahrzeugs 2 in Wirkverbindung stehenden elektrischen Schaltkreises (siehe Fig.4) angeordnet. Die Anordnung von Notausschalter 51, Handtaster 52, Schlüsselschalter 53 sowie der Endschalter 31 im Sicherheitsschaltkreis nach Fig.4 dem desweiteren ein Magnetventil 19 sowie eine vom Fahrersitz aus sichtbare Kontrollampe 17 angehören ist aus Fig.4 ersichtlich. In Fig.4 ist auch ein Federspeicherzylinder 18 der Bremsanlage des Kraftfahrzeugs 1 gezeigt, der über das Magnetventil 19 in Wirkverbindung mit dem Schaltkreis nach Fig.4 steht. Dieser Schaltkreis soll sicherstellen, daß ein Verfahren bzw. Bewegen des In—spektionsfahrzeugs 1 bei geöffneter Arbeitsöffnung 2 nicht oder nur unter be-stimmten vorgebbaren, Unfälle ausschließenden Bedingun-gen möglich ist.

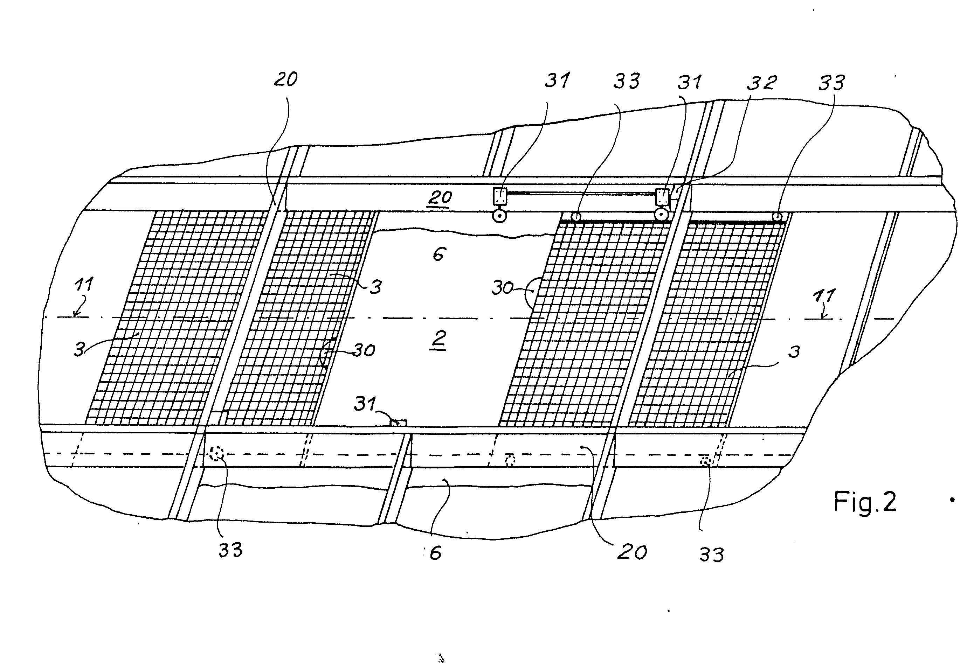

In Fig.2 und insbesondere in Fig.3 ist im Bereich zwischen Unterseite des Fahrzeugbodens 10 und der Oberfläche des Bodens O eine Abschirmung 6 gezeigt, und zwar ist in Fig.3 gesehen auf der linken Seite eine Pendelschürze etwa parallel zur Frontseite 12 des Inspektionsfahrzeugs 1 dargestellt und auf der rechten Seite als Ausschnit t ein auf und ab bewegbarer Faltenbalgen gezeigt. Diese Abschirmung 6 bildet eine variable, schachtförmige Verbindung zwischen der Unterseite des Fahrzeugbodens 10 und der Oberfläche des Bodens O, so daß bei stehendem Inspektionsfahrzeug 1 in der Arbeitsöffnung 2 an einem darunter angeordneten Feuer 9 ein im wesentlichen von Außeneinflüssen abgeschottetes Arbeiten gegeben ist.

Das Inspektionsfahrzeug 1 nach den Figuren 1 bis 4 ist entsprechend seinem bevorzugten Anwendungsbereich mit Werkzeugen und Arbeitseinrichtungen ausgestattet, wie sie zur Wartung, Reinigung und/oder Reparatur von Befeuerungen an Flughäfen, beispielsweise Unterflurfeuern 9, benötigt werden. So ist im Heckteil des Inspektionsfahrzeugs 1 (siehe linker Abschnitt in Fig.3) ein Stahlakkumulator 56 bzw. zwei 24 V-Batterien sowie ein dazu geschalteter Umformer 57 angeordnet. Dieser Umformer liefert über Anschlußsteckdosen 54' im Zugriffsbereich der Arbeitsplätze 4 Strom von 220 V beispielsweise für die Versorgung von elektrischen Drehmoment-Schraubern 54 oder für einen Staubsauger 552 mit Luftanschlußstellen 55 ebenfalls im näheren Umkreis der Arbeitsplätze 4. Neben Werkzeugregalen 59 sowie einem Heiz- und Kühlgerät 58 für das Fahrzeuginnere ist noch eine Druckluftquelle in Form einer Preßluftflasche 551 im Inspektionsfahrzeug 1 aufgenommen. Druckluft aus der Preßluftflasche sowie über den Staubsauger 552 entfernbare hygroskopische Substanzen, wie beispielsweise Silikagel, werden mit Erfolg zur Reinigung und Trocknung verschmutzter und/oder feuchter Feuer-Unterteile angewendet. Die Oberteile der Feuer 9 werden dabei nach Lösen der Verbindungsschrauben mit einem Drehmomentschrauber 54 entfernt und vorzugsweise durch ein in dem Regal 59 vorbereitet gelagertes komplettes Oberteil ausgetauscht.

- 13 -

Das Inspektionsfahrzeug 1 ist mit einer Reihe von Sicherheitseinrichtungen ausgestattet, so daß sichergestellt ist, daß während der Arbeiten an der geöffneten Arbeitsöffnung 2 ein unbeabsichtigtes Verfahren des Kraftfahrzeugs 2 unmöglich ist. Im einzelnen sind nachstehende Verriegelungen vorgesehen:

Bei geschlossener Arbeitsöffnung 2 und bei Betätigen eines nicht dargestellten Wahlschalters kann das Inspektionsfahrzeug 1 verfahren werden.

Bei geschlossener Öffnung 2 undBetätigen der acht Endschalter 31 sowie Schalten des Wahlschalters auf "Reparatur-Fahrt" kann das Inspektionsfahrzeug 1 verfahren werden. Wird einer der acht Endschalter 31 nicht betätigt, so ist über das auf die Fahrzeugbremse wirkende Magnetventil die Weiterfahrt des Kraftfahrzeugs blockiert.

Bei unbeabsichtigtem Öffnen des Verschlusses der Arbeitsöffnung 2 wird der Federspeicherzylinder 18 über das Magnetventil 19 entlüftet und das Kraftfahrzeug 1 sofort gebremst.

Über eine optische Anzeige bzw. Lampe 17 wird der Fahrer des Inspektionsfahrzeugs 2 informiert, ob der Verschluß der Arbeitsöffnung 2 geschlossen und der Federspeicherzylinder 18 be- oder entlüftet ist.

Bei Betätigung des Not-Ausschalters 51 wird ebenfalls über die Bremsanlage jegliche Weiterfahrt des Inspektionsfahrzeugs 1 verhindert.

Bei geschlossenem Verschluß der Arbeitsöffnung 2 und bei Schalten des Wahlschalters auf "Kontroll-Fahrt" ist ein Verfahren bzw. Bewegen des Inspektionsfahrzeugs 1 möglich, falls der Schlüsselschalter 53 im Bereich der Öffnung 2 betätigt wird.

- 14 -

Patentansprüche

1. Inspektionsfahrzeug für Inspektions-, Wartungs-,
Reparatur- und/oder Montagearbeiten an bodennahen
Anlagen       an Flughäfen
gekennzeichnet durch wenigstens einen Arbeits- bzw.
Sitzplatz (4), der im Bereich einer verschließbaren
Arbeitsöffnung (2) im Fahrzeugboden (10) mit geringer Freiheit vom Boden (0) im Inneren des Fahrzeugs oder Kraftfahrzeugs (1) ausgebildet ist.

2. Inspektionsfahrzeug nach Anspruch 1, dadurch gekennzeichnet, daß in Längsachse (11) des Inspektionsfahrzeugs gesehen wenigstens zwei gegenüber angeordnete Arbeits- bzw. Sitzplätze (4) vorgesehen sind.

3. Inspektionsfahrzeug nach Anspruch 1 oder 2, dadurch gekennzeichnet, daß im Bereich der Arbeitsöffnung (2) jedem Arbeits- bzw. Sitzplatz (4) Fußstützen (40) zugeordnet sind.

4. Inspektionsfahrzeug nach Anspruch 1, 2 oder 3, dadurch gekennzeichnet, daß im Bereich der Arbeits- bzw. Sitzplätze (4) Not-Ausschalter (51), Handtaster (52) und/oder Schlüsselschalter (53) eines vorzugsweise mit einer Bremse des Inspektionsfahrzeugs (1) in Wirkverbindung stehenden elektrischen Schaltkreises (Fig.4) angeordnet sind.

5. Inspektionsfahrzeug nach einem oder mehreren der Ansprüche 1 bis 4, dadurch gekennzeichnet, daß der Verschluß der Arbeitsöffnung (2) aus durchsichtigem Material besteht und/oder als Gitterkonstruktion ausgebildet ist.

6. Inspektionsfahrzeug nach einem oder mehreren der Ansprüche 1 bis 5, dadurch gekennzeichnet, daß als Verschluß für die Arbeitsöffnung (2) wenigstens eine in Schließ- und/oder in Offenstellung verriegelbare Schiebetür (3) vorgesehen ist.

7. Inspektionsfahrzeug nach Anspruch 6, dadurch gekennzeichnet, daß die Schiebetür (3) in Schließ- und/oder Offenstellung mit Endschaltern (31) eines vorzugsweise mit einer Bremse des Inspektionsfahrzeugs in Wirkverbindung stehenden elektrischen Schaltkreises (Fig.4) in Kontakt ist.

8. Inspektionsfahrzeug nach Anspruch 6 oder 7, dadurch gekennzeichnet, daß die Schiebetür (3) in Offenstellung von einem Federspeicher (32) gehaltert ist.

9. Inspektionsfahrzeug nach einem oder mehreren der Ansprüche 1 bis 8, dadurch gekennzeichnet, daß die Arbeitsöffnung (2) im Bereich zwischen Unterseite des Fahrzeugbodens (10) und Oberfläche des Bodens (O) durch Schürzen bzw. Pendelschürzen, auf- und abbewegbare Abschirmwände oder auf- und abbewegbare Faltenbalgen abschirmbar ist.

10. Inspektionsfahrzeug nach einem oder mehreren der Ansprüche 1 bis 9, dadurch gekennzeichnet, daß an der Frontseite (12) des Inspektionsfahrzeugs (1) eine lösbar befestigte Positionier- bzw. Peilvorrichtung (7) hervorragt.

11. Inspektionsfahrzeug nach Anspruch 10, dadurch gekennzeichnet, daß als Positionier- bzw. Peilvorrichtung ein dreieckförmiges Rahmengestell vorgesehen ist, dessen vorderes, freies Ende (70) bzw. Dreiecksspitze von einem Rad (71) unterstützt ist.

12. Inspektionsfahrzeug nach Anspruch 10 oder 11, dadurch gekennzeichnet, daß im Bereich des vorderen Endes (70) ein Impulsgeber (72) und/oder eine Positionsleuchte (73) vorgesehen ist.

13. Inspektionsfahrzeug nach einem oder mehreren der Ansprüche 1 bis 12 dadurch gekennzeichnet, daß an einer oder an beiden Längsseiten (13) des Inspektionsfahrzeugs (1) ein auskragender, über eine Seitentür (14) vom Inspektionsfahrzeug (1) zugängiger Seitenausleger (8) mit Arbeitsplatz lösbar befestigt ist.

Fig. 1

Fig. 4

1/3

0031969

Fig.2

20 31 33 31 32 33

20

6

11

3

30

3

30

2

11

3

31

33 6 20 33

213

0031969

Fig.3

Europäisches Patentamt

**EUROPÄISCHER RECHERCHENBERICHT**

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| AD | US - A - 3 914 955 (McCULLOUGH) <br> * Gesamte Druckschrift * <br><br> ---- | | 1 | B 60 P 3/14 <br> B 64 F 1/00 |

**RECHERCHIERTE SACHGEBIETE (Int. Cl.³)**

B 60 P
B 64 F

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | | |
|---|---|---|---|
| Recherchenort <br> Den Haag | Abschlußdatum der Recherche <br> 11-03-1981 | Prüfer <br> PETERS | |

EPA form 1503.1   06.78